# EUROPEAN PATENT SPECIFICATION

(11) **EP 0 781 238 B1**
(45) Date of publication and mention of the grant of the patent: **12.07.2000**
(21) Application number: 95932268.6
(22) Date of filing: 07.09.1995
(51) Int. Cl.: B65D 65/46, B65D 30/08

(54) **CONTAINER OF PAPER OR PAPERBOARD WITH A PARTIAL BARRIER LAYER**
PAPIER-ODER KARTONBEHÄLTER WELCHER TEILWEISE MIT EINER SPERRSCHICHT VERSEHEN IST
RECIPIENT EN PAPIER OU EN CARTON POURVU D'UNE COUCHE BARRIERE PARTIELLE

(30) Priority: 13.09.1994 SE 9403051
(43) Date of publication of application: 02.07.1997
(73) Proprietor: KORSNÄS AB, S-801 81 Gävle (SE)
(72) Inventor: JÖVES, Hakan, S-802 66 Gävle (SE); HANSSON, Per, Ulf, S-821 94 Bollnäs (SE); LÖFROTH, Johanna, S-890 35 Husum (SE); SÖDERBERG, Bo, S-804 26 Gävle (SE); RODELL, Lundgren, Kerstin, S-804 26 Gävle (SE)
(74) Representative: Nilsson, Brita Linnea
(86) International application number: SE9501005
(87) International publication number: WO9608422

(56) References cited:
- DE-A- 4 212 306
- SE-A- 9 302 773
- US-A- 5 178 469

## Description

The present invention relates to a bag or sack of paper or paperboard with a partial barrier layer. More precisely, the invention relates to a bag or sack which primarily consists of paper or paperboard and which has a water-resistant, and preferably to some extent water vapor permeable, barrier layer, which is degradable in a compost, only on those parts of the bag or sack surface which are intended for exposure to wet material. Further, the invention relates to a method of disposing of such a bag or sack and the use of such a bag or sack for storage and transport of compostable waste.

### Background

Ecological thinking has made it important to look at how different used materials are disposed of. Waste management is dependent on the type of waste in question. Composting is one favourable way of disposing of biologically degradable material, such as garden and food waste.

Up to now, an average household has not pre-sorted household waste. However, at least in some European countries like Germany and Sweden many households pre-sort glass and waste paper from the rest of the domestic waste. Serious attempts are now made to get households to also pre-sort compostable waste, such as fruit and potato peels, left-over food, coffee filters with contents, etc.

One of the main problems encountered in field trials aiming at pre-sorting of compostable waste in ordinary households are that untreated paper bags, which are themselves compostable, cannot be used for storage of wet contents for a few days without bursting or littering the surroundings, and plastics bags are normally not compostable. Another problem has been that compostable waste which is gathered and stored for a few days starts to smell since odor-forming anaerobic degradation starts. Therefore, the containers in which the comostable waste is stored are kept closed to trap such smell.

It is desirable that the container which is used for transport and storage of compostable waste is in itself compostable, since it is convenient for i.a. restaurants, shops and households to assemble compostable waste in a container which, after it has been filled up, can be thrown into the compost together with its contents.

One solution to the container problem has been presented in US patent No. 5 178 469. This patent discloses a collapsible biodegradable container bag for liquid-containing waste solid materials, which container is formed of a single sheet of a two-ply construction of an outer paper layer and an inner cellulose film layer having a controlled porosity and a specified vapor transfer rate through said layer. Preferably said container bag comprises a liquid absorbing wick liner located on the inner surface of the bottom wall. The container has a controlled porosity of the cellulose film layer for the slow passage of water vapor and gases therethrough for enhanced biodegradability of the bag and its contents in a composting environment. Further, according to said patent, the bag-like container construction should be such that odors are substantially trapped within the container during standby periods.

In the development of containers for compostable waste, it has now been found that the containers should be kept open for maximum admission of air during storage of compostable waste in order to minimize odour-forming anaerobic degradation of the waste. Also, the container should be kept with free admission of air to the side walls and optionally to the bottom thereof, possibly in a wire basket. Further, the compostable container should be constructed so that it contributes to the aerating of the container contents by allowing some penetration of air and water vapor through the container walls.

### Description of the invention

The object of the present invention is to provide a bag or sack which can be disposed of by composting and which primarily consists of paper or paperboard and which may hold dry, semi-dry and/or wet solid and/or semi-solid material for at least a few days without littering the surroundings. Furthermore, it should counteract odour-forming anaerobic degradation of such material, i.e. the material should not start to putrefy.

The paper or paperboard contributes to good composting results by providing a carbon source. Further, in a bag or sack which primarily consists of paper or paperboard, the paper or paperboard will provide the physical form of the bag or sack and the mechanical strength thereof.

For the purpose of the invention, the paper or paper board may in principle be of any type of paper or paperboard, such as coated or uncoated paper or paperboard which has been manufactured from bleached, partially bleached or unbleached paper pulp or recycled fibre.

It is well known in the art that paper and paperboard "breathe", i.e. some air and water vapor will penetrate the paper or paperboard. However, to be able to use a bag or sack of paper or paperboard for transport and/or storage of wet or semi-dry material the bag or sack needs a water-resistant barrier layer on the surface of the paper or paperboard.

To be able to compost a bag or sack of paper or paperboard which has a water-resistant barrier layer, said layer must be biodegradable or at least degradable in a functioning compost to such a degree that there are no obviously distinguishable residues of said layer in the composted material. The same applies for other parts of the bag or sack, such as optional handles or adhesive used for the construction of the bag or sack.

By the expression "degradable" is intended that the material is degraded, i.e. that it can undergo an irreversible process which leads to a significant change of the chemical and/or physical structure of the material, which is typically characterized by loss of properties (e.g. integrity, molecular weight or structure, mechanic strength) and/or fragmentation.

There are a number of suitable barrier materials which satisfy the above requirements and some of them are available on the market, such as Biopol from Zeneca, Germany, and DC 1708 and DC 1718 from Dusseka Campbel Great Britain. Biodegradable adhesives are also available, such as starch and polyvinyl acetate adhesives.

In order to improve the air and water vapor permeability of the bag or sack intended for disposal in a compost, and since only those parts of the bag or sack which are exposed to wet contents for an extended period of time need a water-resistant barrier layer, the bag or sack of the invention has a barrier layer only on those parts of the bag or sack surface which are intended for exposure to wet material. An additional advantage will be lower costs for the barrier material, since it is only needed for a part of the surface of the bag or sack.

Thus, the present invention provides a bag or sack which can be disposed of in a compost and which primarily consists of paper or paperboard having a water-resistant, preferably to some extent water vapor permeable, barrier layer which is degradable in a compost, the characteristic feature being that the bag or sack has a barrier layer only on those parts of the bag or sack surface which are intended for exposure to wet material, i.e. on the bottom and a few centimetres up on the side walls of the bag or sack. In an embodiment of the invention said barrier layer is on the inside of the bag or sack.

In another embodiment of the invention, the dry weight of the barrier layer is between 1 and 12 grams, especially approximately 5 to 6 grams, per square meter paper or paperboard.

The bag or sack according to the invention may be manufactured by the use of any suitable technique in the packaging industry. Also, the barrier layer may be applied onto the paper or paperboard in any suitable known manner, such as by the use of blade or roller coating, size press, film press or printing technique, such as flexographic technique.

Another aspect of the invention is directed to a method of disposing of a bag or sack according to the invention, with or without compostable contents, by placing it in a compost.

Yet another aspect of the invention is directed to the use of a bag or sack according to the invention for storage and transport of compostable waste.

The bag or sack of the invention may have any primary use, such as a bag or sack for food or detergents, carry bag or bag for compostable waste.

If the bag or sack of the invention is to be used for storage and transport of wet or semi-dry compostable household waste, the bag or sack is preferably a paper bag or sack which has a barrier layer only on the inside of the bag and only on the bottom and a few centimetres up on the side walls of the bag or sack.

If on the other hand the bag or sack of the invention is to be used as a carry bag, then the barrier layer is preferably on the outside of the bag and covers the bottom and optionally a few centimetres on the side walls of the bag, so that the bag may be put down on a wet pavement without the risk of soaking the paperbottom of the bag. Then such a carry bag may be turned inside out for the purpose of being used as a bag or sack for compostable waste.

## Claims

1. A bag or sack which primarily consists of paper or paperboard and which has a water-resistant, and preferably to some extent water vapor permeable, barrier layer which is degradable in a compost, **characterized** in that said bag or sack has a barrier layer only on the bottom and a few centimetres up on the side walls.

2. The bag or sack according to claim 1, wherein said barrier layer is on the inside of the bag or sack.

3. The bag or sack according to claim 1 or 2, wherein the dry weight of the barrier layer is between 1 and 12 grams per square meter paper or paperboard.

4. The bag or sack according to any one of claims 1-3, wherein the dry weight of the barrier layer is approximately 5 to 6 grams per square meter paper or paperboard.

5. The bag or sack according to any one of claims 1-6, wherein the barrier layer has been applied onto the paper or paperboard by the use of printing technique.

6. A method of disposing of a bag or sack according to any one of claims 1-5, **characterized** in that said bag or sack, with or without compostable contents, is placed in a compost.

7. Use of a bag or sack according to any one of claims 1-5 for storage and transport of compostable waste.

## Patentansprüche

1. Beutel oder Sack, der hauptsächlich aus Papier oder Pappe besteht und der eine wasserbeständige und vorzugsweise zu einem gewissen Ausmaß Wasserdampf durchlässige Sperrschicht aufweist, die in einem Kompost abbaubar ist,
dadurch **gekennzeichnet** , dass der Beutel oder Sack eine Sperrschicht nur an dem Boden und einigen Zentimetern an den Seitenwänden nach oben aufweist.

2. Beutel oder Sack nach Anspruch 1, wobei sich die Sperrschicht an der Innenseite des Beutels oder Sackes befindet.

3. Beutel oder Sack nach Anspruch 1 oder 2, wobei das Trockengewicht der Sperrschicht zwischen 1 und 12 Gramm pro Quadratmeter Papier oder Pappe beträgt.

4. Beutel oder Sack nach einem der Ansprüche 1 bis 3, wobei das Trockengewicht der Sperrschicht etwa 5 bis 6 Gramm pro Quadratmeter Papier oder Pappe beträgt.

5. Beutel oder Sack nach einem der Ansprüche 1 bis 6, wobei die Sperrschicht auf das Papier oder die Pappe durch die Verwendung einer Drucktechnik aufgebracht wurde.

6. Verfahren zum Entsorgen eines Beutels oder Sackes nach einem der Ansprüche 1 bis 5,
dadurch **gekennzeichnet,** dass der Beutel oder Sack, mit oder ohne kompostierbarem Inhalt, auf einen Kompost gebracht wird.

7. Verwendung eines Beutels oder Sackes nach einem der Ansprüche 1 bis 5 für die Unterbringung und den Transport von kompostierbarem Abfall.

## Revendications

1. Sachet ou sac constitué principalement de papier ou de carton et possédant une couche barrière résistante à l'eau, et de préférence perméable, dans une certaine mesure, à la vapeur d'eau, cette couche barrière étant dégradable en un compost, **caractérisé en ce que** ledit sachet ou sac possède une couche barrière seulement sur la fond et sur une hauteur de quelques centimètres sur les parois latérales.

2. Sachet ou sac selon la revendication 1, **caractérisé en ce que** ladite couche barrière est à l'intérieur du sachet ou du sac.

3. Sachet ou sac selon la revendication 1 ou 2, **caractérisé en ce que** le poids à sec de la couche barrière est compris entre 1 et 12 grammes par mètre carré de papier ou de carton.

4. Sachet ou sac selon une quelconque des revendications 1 à 3, **caractérisé en ce que** le poids à sec de la couche barrière est d'environ 5 à 6 grammes par mètre carré de papier ou de carton.

5. Sachet ou sac selon une quelconque des revendications 1 à 4, **caractérisé en ce que** la couche barrière est appliquée sur le papier ou le carton en utilisant une technique d'impression.

6. Procédé pour se défaire d'un sachet ou d'un sac suivant une quelconque des revendications 1 à 5, **caractérisé en ce que** ledit sachet ou sac, avec ou sans contenu transformable en compost, est placé dans du compost.

7. Utilisation d'un sachet ou sac suivant une quelconque des revendications 1 à 5, **caractérisée en ce qu**'elle est destinée au stockage et au transport de déchets transformables en compost.
